# EUROPÄISCHE PATENTSCHRIFT

(11) **EP 4 324 696 B1**
(45) Veröffentlichungstag und Bekanntmachung des Hinweises auf die Patenterteilung: **22.04.2026**
(21) Anmeldenummer: 23192301.2
(22) Anmeldetag: 19.08.2023
(51) Int. Cl.: B60P 3/36, B60R 15/02

(54) **FREIZEITFAHRZEUG MIT EINER NASSZELLE UND EINEM SCHWENKACHSENLAGER**
RECREATIONAL VEHICLE COMPRISING A WET CELL AND A PIVOT AXLE BEARING
VÉHICULE DE LOISIR AVEC UNE CELLULE HUMIDE ET UN PALIER DE PIVOTEMENT

(30) Priorität: 19.08.2022 DE 102022121094
(43) Veröffentlichungstag der Anmeldung: 21.02.2024
(73) Patentinhaber: Hymer GmbH & Co. KG, 88339 Bad Waldsee (DE)
(72) Erfinder: Steigmiller, Anton, 88444 Ummendorf (DE)
(74) Vertreter: Müller Schupfner & Partner Patent- und Rechtsanwaltspartnerschaft mbB (Muc)

(56) Entgegenhaltungen:
- EP-A1- 3 778 308
- EP-B1- 0 263 769
- US-A1- 2003 208 842
- US-A1- 2022 259 908

## Beschreibung

Die Erfindung betrifft ein Freizeitfahrzeug mit vorzugsweise einer Nasszelle und einem Schwenkachsenlager, das für ein Schwenkachse einer Schwenkwand dient. Vorzugsweise dient die Schwenkwand für eine Nasszelle. Insbesondere betrifft die Erfindung das Gebiet der Freizeitfahrzeuge, die als Wohnmobil oder Wohnwagen ausgestaltet sind.

Aus der DE 10 2019 122 085 A1 ist eine Nasszelle für ein Campingfahrzeug bekannt. Hierbei ist eine Schwenkwand vorgesehen. Die Schwenkwand kann den Innenraum der Nasszelle in einen Duschraum und einen Nebenraum teilen.

US 2003/208842 A1 offenbart eine Duschkabine u.a. für ein Wohnmobil mit einer stationären und einer beweglichen Struktur, an der eine gebogene Tür schwenkbar angebracht ist und die durch Drehelemente mit der stationären Struktur verbunden ist. Das untere Drehelement ist so ausgelegt, dass er mit einer in einem Gehäuseträgerelement enthaltenen Feder in Eingriff kommt.

US 2022/259908 offenbart ein Scharnier zur lösbaren Verbindung einer Tür mit einem Rahmen. Das Scharnier umfasst ein Rahmenteil zur Befestigung am Rahmen, ein Türteil zur Befestigung an der Tür, einen Scharnierstift mit einer Stiftachse und ein Verriegelungselement. Das Verriegelungselement ist zwischen einer Verriegelungsstellung und einer Freigabestellung verstellbar, und die Bewegung des Rahmenteils und des Türteils relativ zueinander entlang einer Bolzenachse aus der Schwenkstellung in die Einbaulage wird durch das Verriegelungselement in der Verriegelungsstellung formschlüssig verhindert und in der Freigabestellung durch das Verriegelungselement freigegeben.

EP 3 778 308 A1 offenbart eine Nasszelle für ein Campingfahrzeug. Gelenkmittel verbinden einen beweglichen Wandabschnitt mit einer Seitenkante eines unbeweglichen Wandabschnitts drehgelenkig.

EP 0 263 769 B1 offenbart ein Scharnier für eine Tür aus einem Flügel und einem zweiten Flügel.

Aufgabe der Erfindung ist es, ein Schwenkachsenlager für eine Schwenkachse einer Schwenkwand eines Freizeitfahrzeugs, eine Nasszelle und ein Freizeitfahrzeug, insbesondere ein Wohnmobil oder einen Wohnwagen, anzugeben, die verbessert ausgestaltet sind.

Die Aufgabe wird durch ein Schwenkachsenlager mit den Merkmalen des unabhängigen Patentanspruchs 1, durch eine Nasszelle mit den Merkmalen des Patentanspruchs 6 und durch ein Freizeitfahrzeug mit den Merkmalen des Patentanspruchs 7 gelöst. Vorteilhafte Weiterbildungen der Erfindung sind in den Unteransprüchen angegeben.

Die Aufgabe wird durch ein Schwenkachsenlager, an dem eine Schwenkachse einer Schwenkwand eines Freizeitfahrzeugs, insbesondere einer Nasszelle eines Freizeitfahrzeugs, lagerbar ist, gelöst, wobei ein erstes Lagerteil, das im montierten Zustand ortsfest im Freizeitfahrzeug angeordnet ist, und ein zweites Lagerteil vorgesehen sind, das mit der Schwenkachse verbunden ist, und wobei das zweite Lagerteil in das erste Lagerteil einfügbar ist und im eingefügten Zustand in dem ersten Lagerteil drehbar gelagert ist.

Ferner wird die Aufgabe durch eine Nasszelle für ein Freizeitfahrzeug, insbesondere Wohnmobil oder Wohnwagen, mit zumindest einem solchen Schwenkachsenlager, an dem im montierten Zustand eine Schwenkachse einer Schwenkwand gelagert ist, gelöst.

Außerdem wird die Aufgabe durch ein Freizeitfahrzeug, insbesondere ein Wohnmobil oder einen Wohnwagen, mit zumindest einem solchen Schwenkachsenlager, an dem im montierten Zustand eine Schwenkachse einer Schwenkwand, insbesondere einer Schwenkwand einer Nasszelle, gelagert ist, gelöst.

Vorteilhaft ist es, dass das zweite Lagerteil entlang der Schwenkachse, insbesondere von unten nach oben, in das erste Lagerteil einfügbar ist und/oder dass das Schwenkachsenlager als oberes Schwenkachsenlager ausgebildet ist. Dadurch kann insbesondere eine demontierbare Schwenktür realisiert werden. Dadurch können im Rahmen einer Wartung beispielsweise Reinigungsmaßnahmen durchgeführt werden.

Vorteilhaft ist es, dass das erste Lagerteil einen Lagerring aufweist und dass das in das erste Lagerteil eingefügte zweite Lagerteil zumindest im Wesentlichen an dem Lagerring drehbar gelagert ist. Hierdurch ist eine zuverlässige und robuste Lagerung möglich. Die Lagerung kann außerdem unempfindliche gegenüber Nässe und Feuchtigkeit realisiert werden. Beispielsweise können die Lagerteile aus Kunststoff beziehungsweise als Kunststoffspritzgussteile ausgebildet sein.

Erfindungsgemäß ist es, dass zumindest eine Sicherung vorgesehen ist, die das in das erste Lagerteil eingefügte zweite Lagerteil in dem ersten Lagerteil sichert. Dadurch kann eine ungewollte Montage verhindert werden. Außerdem kann die Sicherung unempfindlich gegenüber Nässe und Feuchtigkeit realisiert werden.

Erfindungsgemäß ist es, dass die Sicherung zumindest eine Sicherungszunge aufweist, die zum Sichern des zweiten Lagerteils in dem ersten Lagerteil zumindest näherungsweise in einer zur Schwenkachse senkrechten Ebene angeordnet ist. Dadurch ist eine zuverlässige Sicherung gegeben, die einfach zu montieren und demontieren ist.

Erfindungsgemäß ist es, dass die Sicherung zumindest eine weitere Sicherungszunge aufweist, die zum Sichern des zweiten Lagerteils in dem ersten Lagerteil zumindest näherungsweise in der zur Schwenkachse senkrechten Ebene angeordnet ist, und dass die Sicherungszunge und die weitere Sicherungszunge an einander gegenüberliegenden Seiten mit dem zweiten Lagerteil zusammenwirken. Hierdurch kann die Stabilität der Sicherung weiter verbessert werden. Außerdem kann eine gleichmäßige Belastung auf den Sicherungszungen realisiert werden, die einen möglichen Verschleiß reduziert.

Vorteilhaft ist es, dass das zweite Lagerteil eine Ringnut aufweist und dass zum Sichern des zweiten Lagerteils in dem ersten Lagerteil zumindest eine Sicherungszunge in die Ringnut eingreift. Dadurch kann insbesondere eine Rotation des zweiten Lagerteils relativ zu dem Sicherungszungen ermöglicht werden.

Erfindungsgemäß ist es, dass zumindest eine Schutzkappe vorgesehen ist, die lösbar mit dem ersten Lagerteil verbindbar ist, und dass die zumindest eine Sicherungszunge an der Schutzkappe ausgestaltet ist. Dadurch wird eine integrierte Funktionsweise ermöglicht. Die Schutzkappe ermöglicht außerdem eine einfache Montage und Demontage.

Vorteilhaft ist es, dass das zweite Lagerteil einen Bund aufweist, der ein Einfügen des zweiten Lagerteils in das erste Lagerteil begrenzt. Hierdurch kann die Montage weiter vereinfacht werden. Dadurch vereinfacht sich auch eine Wartung.

Weitere Vorteile und Einzelheiten der Erfindung werden anhand der in den schematischen Figuren dargestellten Ausführungsbeispiele näher erläutert. Hierbei zeigen:
- Fig. 1: ein Freizeitfahrzeug mit einer Nasszelle entsprechend einem ersten Ausführungsbeispiel in einer schematischen, räumlichen Darstellung, wobei eine Ansicht von schräg oben dargestellt ist und eine Schwenkwand an eine feststehende Wand geschwenkt ist;
- Fig. 2: das in Fig. 1 gezeigte Freizeitfahrzeug mit der Nasszelle, wobei die Schwenkwand in die Nasszelle geschwenkt ist, um einen Duschbereich von der Toilette abzugrenzen;
- Fig. 3: ein Schwenkachsenlager in einer auszugsweisen, schematischen Schnittdarstellung, wobei eine Ansicht entsprechend einer Sicht auf eine Seitenwand, an der ein erstes Lagerteil befestigbar ist, dargestellt ist;
- Fig. 4: das in Fig. 3 gezeigte Schwenkachsenlager aus der mit IV bezeichneten Blickrichtung;
- Fig. 5: das in Fig. 3 gezeigt Schwenkachsenlager ohne die Schutzkappe, wobei eine Montage an einer feststehenden Wand veranschaulicht ist;
- Fig. 6: das in Fig. 3 gezeigt Schwenkachsenlager ohne die Schutzkappe, wobei ein demontierter Zustand dargestellt ist, bei dem das zweite Lagerteil nach unten aus dem ersten Lagerteil gezogen ist;
- Fig. 7: das in Fig. 3 gezeigt Schwenkachsenlager, wobei die Montage beziehungsweise Demontage der Schutzkappe veranschaulicht ist;
- Fig. 8: ein Freizeitfahrzeug mit einer Nasszelle entsprechend einem zweiten Ausführungsbeispiel in einer auszugsweisen, schematischen Darstellung von oben, wobei die Schwenkwand an eine Toilette geschwenkt ist; und
- Fig. 9: das in Fig. 8 gezeigte Freizeitfahrzeug, wobei die Schwenkwand von der Toilette weg geschwenkt ist.

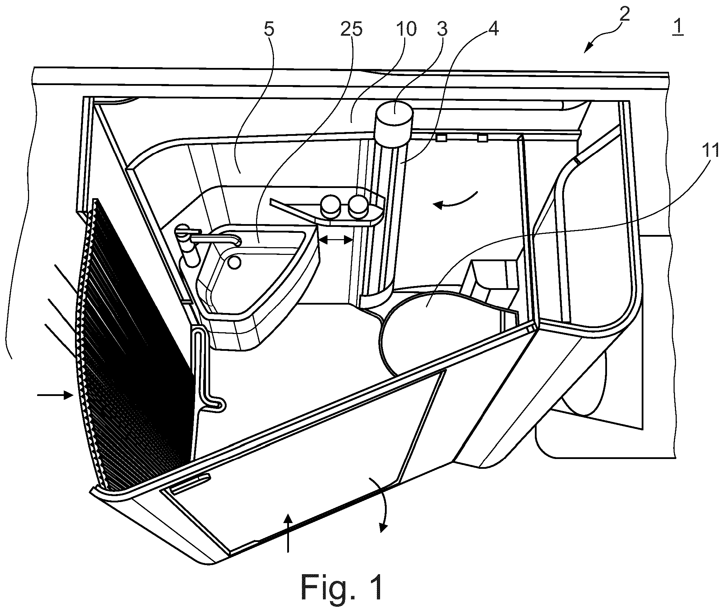

Fig. 1 zeigt ein Freizeitfahrzeug 1 mit einer Nasszelle 2 entsprechend einem ersten Ausführungsbeispiel in einer schematischen, räumlichen Darstellung, wobei eine Ansicht von schräg oben dargestellt ist. Hierbei ist in der Nasszelle 2 ein Schwenkachsenlager 3 angeordnet, an dem eine Schwenkachse 4 einer Schwenkwand 5 der Nasszelle 2 des Freizeitfahrzeugs 1 gelagert ist. Das Schwenkachsenlager 3 ist als oberes Schwenkachsenlager 3 ausgebildet. Zusammen mit weiteren Scharnieren und/oder Lagern für die Schwenkachse 4 ist die Schwenkwand 5 im montierten Zustand schwenkbar. In der Darstellung der Fig. 1 ist die Schwenkwand 5 an an eine feststehenden Wand 10 der Nasszelle 2 geschwenkt.

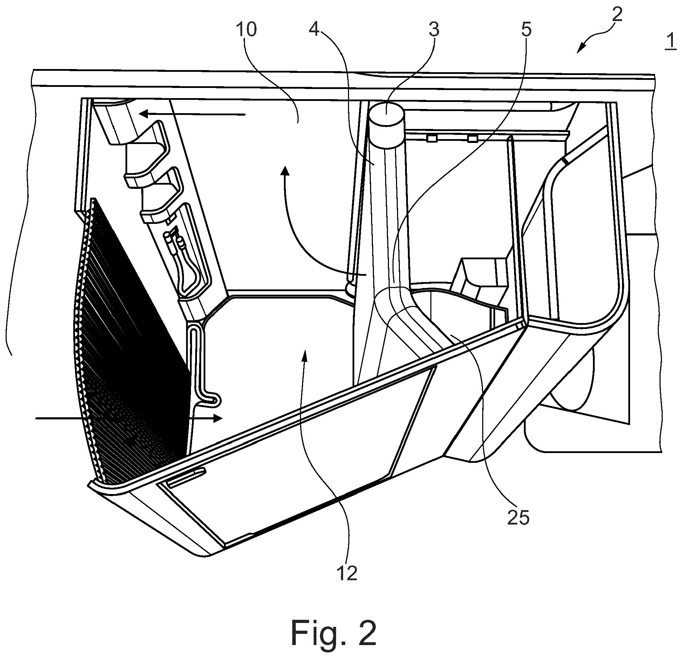

Fig. 2 zeigt das in Fig. 1 gezeigte Freizeitfahrzeug 1 mit der Nasszelle 2, wobei die Schwenkwand 5 in die Nasszelle 2 an eine Toilette 11 geschwenkt ist. Dadurch ist ein Duschbereich 12 von der Toilette 11 abgegrenzt.

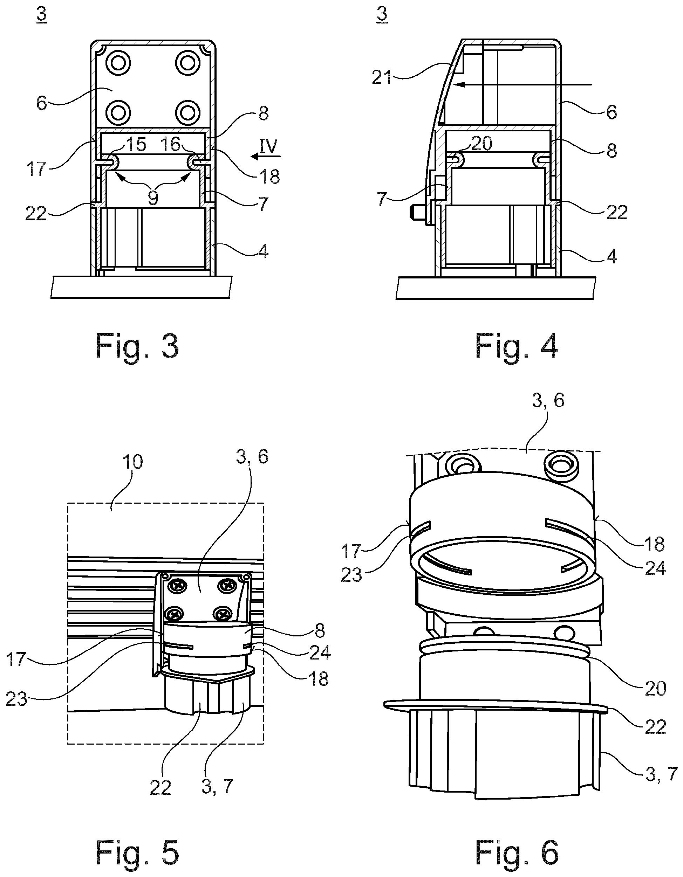

Fig. 3 zeigt das Schwenkachsenlager 3 in einer auszugsweisen, schematischen Schnittdarstellung, wobei eine Ansicht entsprechend einer Sicht auf die feststehende Wand (Seitenwand) 10, an der das erste Lagerteil befestigt ist, dargestellt ist. Fig. 4 zeigt das in Fig. 3 gezeigte Schwenkachsenlager 3 aus der mit IV bezeichneten Blickrichtung. Das Schwenkachsenlager 3 umfasst ein erstes Lagerteil 6 und ein zweites Lagerteil 7 sowie eine Schutzkappe 21. Das erste Lagerteil 6 ist durch die Befestigung an der Wand 10 ortsfest im Freizeitfahrzeug 1 angeordnet. Das zweite Lagerteil 7 ist mit der Schwenkachse 4 verbunden. Hierbei kann das zweite Lagerteil 7 in das erste Lagerteil 6 einfügt und auch wieder entfernt werden, wie es auch anhand Fig. 6 veranschaulicht ist. Im eingefügten Zustand ist das zweite Lagerteil 7 drehbar in dem ersten Lagerteil 6 gelagert.

Fig. 5 zeigt das in Fig. 3 gezeigt Schwenkachsenlager 3 ohne die Schutzkappe 21, wobei eine Montage an der feststehenden Wand 10 veranschaulicht ist. Fig. 6 zeigt das in Fig. 3 gezeigt Schwenkachsenlager 3 ohne die Schutzkappe 21, wobei ein demontierter Zustand dargestellt ist, bei dem das zweite Lagerteil 7 nach unten aus dem ersten Lagerteil 6 gezogen ist.

Das zweite Lagerteil 7 wird zur Montage der Schwenkwand in die Nasszelle 1, was auch nach einem Service beziehungsweise einer Wartung erfolgen kann, entlang der Schwenkachse 4 von unten nach oben in das erste Lagerteil 6 eingefügt. Hierbei weist das erste Lagerteil 6 einen Lagerring 8 auf. Wenn das zweite Lagerteil 7 in das erste Lagerteil 6 eingefügt ist, dann ist das zweite Lagerteil 7 an dem Lagerring 8 drehbar gelagert.

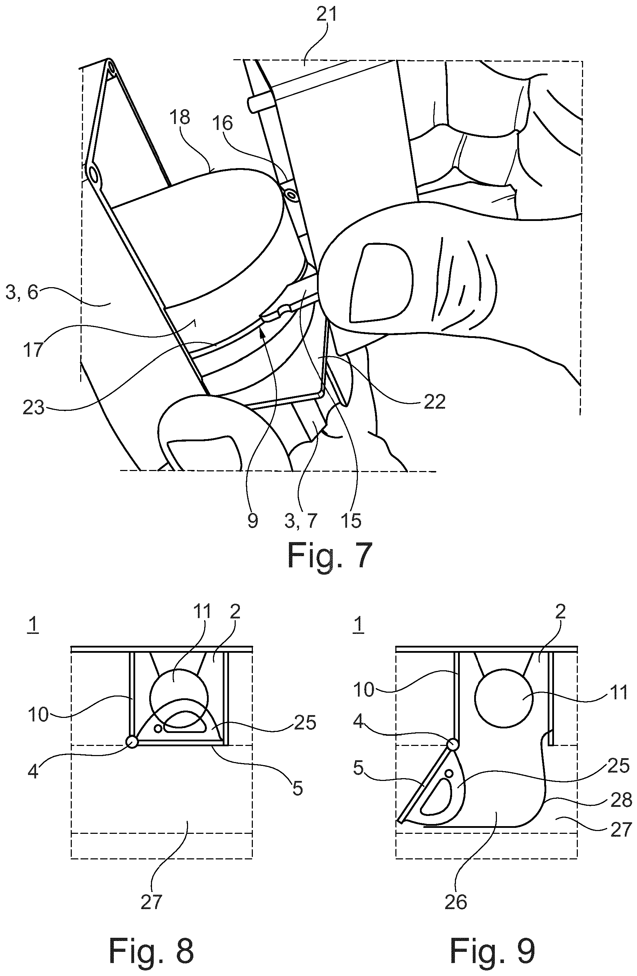

Fig. 7 zeigt das in Fig. 3 gezeigte Schwenkachsenlager 3, wobei die Montage beziehungsweise Demontage der Schutzkappe 21 veranschaulicht ist. Die Schutzkappe 21 realisiert hierbei einen Schutz gegenüber Verschmutzung, Beschädigung und gegenüber einem Einklemmen von Körperteilen. Zusätzlich realisiert die Schutzkappe 21 eine Sicherung 9. Die Sicherung 9 sichert das zweite Lagerteil 7 in dem ersten Lagerteil 6. Hierfür weist die Sicherung 9 in diesem Ausführungsbeispiel eine Sicherungszunge 15 und eine weitere Sicherungszunge 16 auf, die an der Schutzkappe 21 ausgebildet sind. Die Sicherungszungen 15, 16 sind zum Sichern des zweiten Lagerteils 7 in dem ersten Lagerteil 6 in einer zur Schwenkachse 4 senkrechten Ebene angeordnet, wenn die Schutzkappe 21 montiert ist.

Die Sicherungszunge 15 und die weitere Sicherungszunge 16 sind an einander gegenüberliegenden Seiten 17, 18 des zweiten Lagerteil 7 angeordnet und wirken dabei formschlüssig mit dem zweiten Lagerteil 7 zusammen. Das zweite Lagerteil 7 weist hierfür eine Ringnut 20 auf, wobei zum Sichern des zweiten Lagerteils 7 in dem ersten Lagerteil 6 die Sicherungszungen 15, 16 in die Ringnut 20 eingreifen, wenn die Schutzkappe 21 montiert ist.

Der Lagerring 8 weist an den Seiten 17, 18 Schlitze 23, 24 auf, Beim Aufsetzen der Schutzkappe 21 greifen die Sicherungszungen 15, 16 durch die Schlitze 23, 24 des Lagerrings 8 des ersten Lagerteils 6 in die Ringnut 20 des zweiten Lagerteils 7. Hierdurch ist ein Translationsfreiheitsgrad entlang der Schwenkachse 4 eingeschränkt.

Um die Montage zu vereinfachen, weist das zweite Lagerteil 7 einen Bund 22 auf. Dadurch ist ein Anschlag gegeben, der das Einfügen des zweiten Lagerteils 7 in das erste Lagerteil 6 begrenzt.

Fig. 8 zeigt ein Freizeitfahrzeug 1 mit einer Nasszelle 2 entsprechend einem zweiten Ausführungsbeispiel in einer auszugsweisen, schematischen Darstellung von oben, wobei die Schwenkwand 5 an eine Toilette 11 geschwenkt ist. Ferner zeigt Fig. 9 das in Fig. 8 gezeigte Freizeitfahrzeug 1, wobei die Schwenkwand 5 von der Toilette 11 weg geschwenkt ist.

Diese Ausgestaltung eignet sich besonders, aber nicht ausschließlich für kleine Freizeitfahrzeuge 1. Dadurch kann eine sehr kleine Nasszelle 2 realisiert werden. Zur Benutzung eines Waschbeckens 25, das an die Schwenkwand 5 montiert ist, oder der Toilette 11 wird die Schwenkwand 5 beispielsweise in die in Fig. 9 gezeigte Stellung geschwenkt, so dass ein Bereich 26 eines Laufbodens mit genutzt werden kann. Durch eine Abtrennung 28, die als Vorhang oder Faltwand ausgebildet sein kann, kann auch ein Sichtschutz oder eine Duschabtrennung realisiert werden.

Eine Versorgung des Waschbeckens 25 mit Frischwasser und ein Abfluss von Brauchwasser kann über die als Schwenktür ausgebildete Schwenkwand 5 und die Schwenkachse 4 erfolgen. Besonders bei solch einer Ausgestaltung ist die Demontierbarkeit der Schwenkwand 5 relevant, um einen Service beziehungsweise eine Wartung zu ermöglichen.

## Patentansprüche

1. Schwenkachsenlager (3), an dem eine Schwenkachse (4) einer Schwenkwand (5) eines Freizeitfahrzeugs (1), insbesondere einer Nasszelle (2) eines Freizeitfahrzeugs (1), lagerbar ist, wobei ein erstes Lagerteil (6), das im montierten Zustand ortsfest im Freizeitfahrzeug (1) angeordnet ist, und ein zweites Lagerteil (7) vorgesehen sind, das mit der Schwenkachse (4) verbunden ist, und wobei das zweite Lagerteil (7) in das erste Lagerteil (6) einfügbar ist und im eingefügten Zustand in dem ersten Lagerteil (6) drehbar gelagert ist,
wobei zumindest eine Sicherung (9) vorgesehen ist, die das in das erste Lagerteil (6) eingefügte zweite Lagerteil (7) in dem ersten Lagerteil (6) sichert.
wobei die Sicherung (9) zumindest eine Sicherungszunge (15) aufweist, die zum Sichern des zweiten Lagerteils (7) in dem ersten Lagerteil (6) zumindest näherungsweise in einer zur Schwenkachse (4) senkrechten Ebene angeordnet ist,
**dadurch gekennzeichnet,**
**dass** die Sicherung (9) zumindest eine weitere Sicherungszunge (16) aufweist, die zum Sichern des zweiten Lagerteils (7) in dem ersten Lagerteil (6) zumindest näherungsweise in der zur Schwenkachse (4) senkrechten Ebene angeordnet ist, und dass die Sicherungszunge (15) und die weitere Sicherungszunge (16) an einander gegenüberliegenden Seiten (17, 18) mit dem zweiten Lagerteil (7) zusammenwirken, und
**dass** zumindest eine Schutzkappe (21) vorgesehen ist, die lösbar mit dem ersten Lagerteil (6) verbindbar ist, und dass die Sicherungszungen (15, 16) an der Schutzkappe (21) ausgestaltet sind.

2. Schwenkachsenlager nach Anspruch 1,
**dadurch gekennzeichnet,**
**dass** das zweite Lagerteil (7) entlang der Schwenkachse (4), insbesondere von unten nach oben, in das erste Lagerteil (6) einfügbar ist und/oder dass das Schwenkachsenlager als oberes Schwenkachsenlager ausgebildet ist.

3. Schwenkachsenlager nach Anspruch 1 oder 2,
**dadurch gekennzeichnet,**
**dass** das erste Lagerteil (6) einen Lagerring (8) aufweist und dass das in das erste Lagerteil (6) eingefügte zweite Lagerteil (7) zumindest im Wesentlichen an dem Lagerring (8) drehbar gelagert ist.

4. Schwenkachsenlager nach eine der Ansprüche 1 bis 3,
**dadurch gekennzeichnet,**
**dass** das zweite Lagerteil (7) eine Ringnut (20) aufweist und dass zum Sichern des zweiten Lagerteils (7) in dem ersten Lagerteil (6) zumindest eine Sicherungszunge (15, 16) in die Ringnut (20) eingreift.

5. Schwenkachsenlager nach einem der Ansprüche 1 bis 4,
**dadurch gekennzeichnet,**
**dass** das zweite Lagerteil (7) einen Bund (22) aufweist, der ein Einfügen des zweiten Lagerteils (7) in das erste Lagerteil (6) begrenzt.

6. Nasszelle (2) für ein Freizeitfahrzeug (1), insbesondere Wohnmobil oder Wohnwagen, mit zumindest einen Schwenkachsenlager (3) nach einem der Ansprüche 1 bis 5, an dem im montierten Zustand eine Schwenkachse (4) einer Schwenkwand (5) gelagert ist.

7. Freizeitfahrzeug (1), insbesondere Wohnmobil oder Wohnwagen, mit zumindest einem Schwenkachsenlager (3) nach einem der Ansprüche 1 bis 5, an dem im montierten Zustand eine Schwenkachse (4) einer Schwenkwand (5), insbesondere einer Schwenkwand (5) einer Nasszelle (2), gelagert ist.

## Claims

1. A swivel axle bearing (3) on which a swivel axis (4) of a swivel wall (5) of a recreational vehicle (1), in particular a wet room (2) of a recreational vehicle (1), can be mounted, wherein a first bearing component (6), which is arranged in a fixed position in the recreational vehicle (1) when assembled, and a second bearing component (7), which is connected to the swivel axis (4), are provided and wherein the second bearing component (7) can be inserted into the first bearing component (6) and is rotatably mounted in the first bearing component (6) when inserted,
wherein at least one securing device (9) is provided which secures the second bearing component (7) inserted into the first bearing component (6) in the first bearing component (6), wherein the securing device (9) has at least one securing tongue (15) which, in order to secure the second bearing component (7) in the first bearing component (6), is arranged at least approximately in a plane perpendicular to the swivel axis (4),
**characterized in that**
the securing device (9) has at least one further securing tongue (16) which is arranged at least approximately in the plane perpendicular to the swivel axis (4) in order to secure the second bearing component (7) in the first bearing component (6), and that the securing tongue (15) and the further securing tongue (16) interact on opposing sides (17, 18) with the second bearing component (7), and
that at least one protective cap (21) is provided, which can be detachably connected to the first bearing component (6), and that the securing tongues (15, 16) are formed on the protective cap (21).

2. The swivel axle bearing according to claim 1,
**characterized in that**
the second bearing component (7) can be inserted into the first bearing component (6) along the swivel axis (4), in particular from bottom to top, and/or that the swivel axle bearing is designed as an upper swivel axle bearing.

3. The swivel axle bearing according to claim 1 or 2,
**characterized in that**
the first bearing component (6) has a bearing ring (8) and that the second bearing component (7) inserted into the first bearing component (6) is mounted rotatably at least substantially on the bearing ring (8).

4. The swivel axle bearing according to one of claims 1 to 3,
**characterized in that**
the second bearing component (7) has a circular groove (20) and that, to secure the second bearing component (7) in the first bearing component (6), at least one securing tongue (15, 16) engages in the circular groove (20).

5. The swivel axle bearing according to one of claims 1 to 4,
**characterized in that**
the second bearing component (7) has a flange (22) which limits an insertion of the second bearing component (7) into the first bearing component (6).

6. A wet room (2) for a recreational vehicle (1), in particular a motor home or caravan, with at least one swivel axle bearing (3) according to one of claims 1 to 5, on which a swivel axis (4) of a swivel wall (5) is mounted when installed.

7. A recreational vehicle (1), in particular a motor home or caravan, with at least one swivel axle bearing (3) according to one of claims 1 to 5, on which a swivel axis (4) of a swivel wall (5), in particular a swivel wall (5) of a wet room (2), is mounted when assembled.

## Revendications

1. Palier d'axe pivotant (3) au niveau duquel peut être monté un axe pivotant (4) d'une paroi pivotante (5) d'un véhicule de loisirs (1), en particulier d'un cabinet de toilette (2) d'un véhicule de loisirs (1), dans lequel il est prévu une première pièce de palier (7) qui, à l'état monté, est agencée de manière fixe dans le véhicule de loisirs (1), et une deuxième pièce de palier (7), qui sont reliées à l'axe pivotant (4), et la deuxième pièce de palier (7) pouvant être insérée dans la première pièce de palier (6) et, à l'état inséré, est montée de manière rotative dans la première pièce de palier (6),
dans lequel il est prévu au moins une sécurité (9) qui sécurise, dans la première pièce de palier (6), la deuxième pièce de palier (7) insérée dans la première pièce de palier (6),
dans lequel la sécurité (9) présente au moins une languette de sécurité (15) qui est agencée pour sécuriser la deuxième pièce de palier (7) dans la première pièce de palier (6), au moins de manière approximative dans un plan perpendiculaire à l'axe pivotant (4),
**caractérisé en ce que**
la sécurité (9) présente au moins une languette de sécurité supplémentaire (16) qui est agencée pour sécuriser la deuxième pièce de palier (7) dans la première pièce de palier (6) au moins de manière approximative dans le plan perpendiculaire à l'axe pivotant (4),
et **en ce que** la languette de sécurité (15) et la languette de sécurité supplémentaire (16) coopèrent au niveau de côtés opposés l'un à l'autre (17, 18) avec la deuxième pièce de palier (7), et
et **en ce qu'**il est prévu au moins un capuchon de protection (21) qui peut être relié de manière détachable à la première pièce de palier (6), et **en ce que** les languettes de sécurité (15, 16) sont réalisées au niveau du capuchon de protection (21

2. Palier d'axe pivotant selon la revendication 1,
**caractérisé en ce que**
la deuxième pièce de palier (7) peut être insérée le long de l'axe pivotant (4), en particulier de bas en haut, dans la première pièce de palier (6) et/ou **en ce que** le palier d'axe pivotant est réalisé comme palier d'axe pivotant supérieur.

3. Palier d'axe pivotant selon la revendication 1 ou 2,
**caractérisé en ce que**
la première pièce de palier (6) présente une bague de palier (8) et **en ce que** la deuxième pièce de palier (7) insérée dans la première pièce de palier (6) est montée de manière rotative au moins sensiblement au niveau de la bague de palier (8).

4. Palier d'axe pivotant selon l'une quelconque des revendications 1 à 3, **caractérisé en ce que**
la deuxième pièce de palier (7) présente une rainure de bague (20) et **en ce que**, pour sécuriser la deuxième pièce de palier (7) dans la première pièce de palier (6), au moins une languette de sécurité (15, 16) s'engage dans la bague de rainure (20).

5. Palier d'axe pivotant selon l'une quelconque des revendications 1 à 4, **caractérisé en ce que**
la deuxième pièce de palier (7) présente une collerette (22) qui limite une insertion de la deuxième pièce de palier (7) dans la première pièce de palier (6).

6. Cabinet de toilette (2) pour un véhicule de loisirs (1), en particulier un camping-car ou une caravane, comprenant au moins un palier d'axe pivotant (3) selon l'une des revendications 1 à 5, au niveau duquel, à l'état monté, un axe pivotant (4) d'une paroi pivotante (5) est monté.

7. Véhicule de loisirs (1), en particulier camping-car ou caravane, comprenant au moins un palier d'axe pivotant (3) selon l'une des revendications 1 à 5, au niveau duquel, à l'état monté, un axe pivotant (4) d'une paroi pivotante (5) est monté, en particulier d'une paroi pivotante (5) d'un cabinet de toilette (2).
